# EUROPÄISCHE PATENTSCHRIFT

(11) **EP 4 147 563 B1**
(45) Veröffentlichungstag und Bekanntmachung des Hinweises auf die Patenterteilung: **18.02.2026**
(21) Anmeldenummer: 22173945.1
(22) Anmeldetag: 18.05.2022
(51) Int. Cl.: A01D 75/28

(54) **SELBSTFAHRENDE ERNTEMASCHINE MIT EINER HÖHENVERSTELLBAREN AUFNAHMEVORRICHTUNG**
SELF-PROPELLED HARVESTER WITH A HEIGHT-ADJUSTABLE HEADER
MOISSONNEUSE DOTÉE D'UNE TÊTE RÉGLABLE EN HAUTEUR

(30) Priorität: 09.09.2021 DE 102021123337
(43) Veröffentlichungstag der Anmeldung: 15.03.2023
(73) Patentinhaber: CLAAS Selbstfahrende Erntemaschinen GmbH, 33428 Harsewinkel (DE)
(72) Erfinder: Füchtling, Christian, 48317 Drenstein Rinkerode (DE); Wielenberg, Andreas, 32049 Herford (DE); Beschorn, Udo, 33428 Harsewinkel (DE); Gehrmann, Marcus, 33428 Marienfeld (DE)
(74) Vertreter: CLAAS Gruppe

(56) Entgegenhaltungen:
- EP-A1- 2 832 206
- EP-A1- 3 735 817
- DE-A1- 102004 032 065
- DE-A1- 102018 107 804
- US-A1- 2018 070 531

## Beschreibung

Die vorliegende Erfindung betrifft eine selbstfahrende Erntemaschine mit einer höhenverstellbaren Aufnahmevorrichtung gemäß dem Oberbegriff des Anspruches 1.

Aus der WO 2020/185873 A1 ist eine selbstfahrende Erntemaschine mit einer höhenverstellbaren Aufnahmevorrichtung, an der ein um eine virtuelle Pendelachse der Aufnahmevorrichtung schwenkbares Vorsatzgerät zur Aufnahme von Erntegut angeordnet ist, bekannt. Das Vorsatzgerät ist mittels eines oder mehrerer durch eine Steuerungsvorrichtung der Erntemaschine ansteuerbare Hydraulikzylinder, die an der Aufnahmevorrichtung angeordnet sind, um die virtuelle Pendelachse der Aufnahmevorrichtung schwenkbar. Bei Vorsatzgeräten mit sehr großer Arbeitsbreite, insbesondere mit mehr als 12 m Gesamtbreite, und/oder sehr hohem Eigengewicht führt das Schwenken des Vorsatzgerätes beim Nachführen des Vorsatzgerätes über dessen gesamte Arbeitsbreite zur Anpassung an eine geänderte Bodenkontur in Querrichtung zu einer ungewollten Anregung der Erntemaschine.

Eine selbstfahrende Erntemaschine mit einer höhenverstellbaren Aufnahmevorrichtung, an der ein um eine virtuelle Pendelachse der Aufnahmevorrichtung schwenkbares Vorsatzgerät zur Aufnahme von Erntegut angeordnet ist, ist aus der DE 10 2020 110 574 A1 bekannt. Die Aufnahmevorrichtung ist zur adaptiven Einstellung eines vertikalen Abstands des Vorsatzgerätes zum Boden eingerichtet, indem mittels zweier Hydraulikzylinder, die sich jeweils endseitig am Rahmen der Erntemaschine abstützen, die Aufnahmevorrichtung und das daran angeordnete Vorsatzgerät in verschiedenen vertikalen Abständen positionierbar ist. Zumindest an den äußeren lateralen Bereichen des Vorsatzgerätes ist jeweils zumindest ein Stützrad angeordnet, welches jeweils durch einen an einen Hydraulikkreislauf eines eine Druckquelle aufweisenden Hydrauliksystems angeschlossenen Hydraulikzylinder höhenbeweglich geführt ist. Die Stützräder sind schwenkbar mit einem Rahmenteil des Vorsatzgerätes verbunden, wobei sich die Stützräder im rückwärtigen Bereich des Vorsatzgerätes, d.h. dem der Aufnahmevorrichtung zugewandten Rückseite des Vorsatzgerätes, befinden. Die Stützräder fungieren als Tasträder zur Bodenführung des Vorsatzgerätes. Die Stützräder werden entsprechend eines von einer Bedienperson der Erntemaschine vorgegebenen vertikalen Abstands ausgefahren, bis ein Bodenkontakt gegeben ist. In dieser Position werden die Hydraulikzylinder der Stützräder arretiert, um beim Führen des Vorsatzgerätes über den zu bearbeitenden Feldboden mit einer stets gleichbleibenden Arbeitshöhe zu arbeiten. Das aus der DE 10 2020 110 574 A1 bekannte Vorzusatzgerät ist dazu eingerichtet, auf eine durch die Bedienperson geänderte Einstellung des vertikalen Abstands durch eine Ansteuerung der Hydraulikzylinder der Stützräder zu reagieren, indem beide eingefahren oder ausgefahren werden.

Bei dieser Ausgestaltung des Vorsatzgerätes erfolgt die Anpassung der Lage des Vorsatzes an eine durch die Tasträder erfassten Änderung der Bodenkontur erst, nachdem das Vorsatzgerät die Änderung der Bodenkontur bereit passiert hat. Der Abstand des frontseitigen Bereichs des Vorsatzgerätes, in welchem Erntegut aufgenommen wird, wird bei einer Änderung der Bodenkontur nicht optimal nachgeführt. Zudem kann nicht sichergestellt werden, dass die Tasträder respektive Stützräder stets Bodenkontakt aufweisen, beispielsweise, wenn das Vorsatzgerät mit seiner Unterseite aufgrund einer Änderung der Bodenkontur auf dem Boden aufliegt. Dies führt insbesondere bei einer Bodendruckregelung des Vorsatzgerätes, bei welcher das Vorsatzgerät mit einem bestimmten Anteil seines Gesamtgewichts auf dem Boden abgelegt wird, zu starken Schwankungen bei der auftretenden Belastung der Tasträder und der Unterseite des Vorsatzgerätes.

Ausgehend von dem vorstehend genannten Stand der Technik liegt der Erfindung die Aufgabe zugrunde, eine selbstfahrende Erntemaschine der vorstehend genannten Art weiterzubilden, welche sich durch eine verbesserte Nachführung des Vorsatzgerätes bei der Anpassung an eine geänderte Bodenkontur auszeichnet, insbesondere, dass der mittlere Abstand zwischen dem frontseitigen Bereich des Vorsatzgerätes und dem Boden im Mittel im Wesentlichen gleich ist und dass die Kraft, mit der sich die Stützräder am Boden abstützen, im Mittel im Wesentlichen konstant gehalten wird.

Diese Aufgabe wird aus vorrichtungstechnischer Sicht ausgehend vom Oberbegriff des Anspruchs 1 in Verbindung mit dessen kennzeichnenden Merkmalen gelöst. Die hierauf jeweils folgenden, abhängigen Ansprüche geben vorteilhafte Weiterbildungen der Erfindung wieder.

Gemäß der Erfindung wird eine selbstfahrende Erntemaschine mit einer höhenverstellbaren Aufnahmevorrichtung, an der ein um eine virtuelle Pendelachse der Aufnahmevorrichtung schwenkbares Vorsatzgerät zur Aufnahme von Erntegut angeordnet ist, vorgeschlagen, wobei die Aufnahmevorrichtung zur adaptiven Einstellung eines vertikalen Abstands des Vorsatzgerätes zum Boden eingerichtet ist, wobei zumindest an den äußeren lateralen Bereichen des Vorsatzgerätes jeweils zumindest ein Stützrad angeordnet ist, welches jeweils durch einen an einen Hydraulikkreislauf eines eine Druckquelle aufweisenden Hydrauliksystems angeschlossenen Hydraulikzylinder höhenbeweglich geführt ist. Erfindungsgemäß ist vorgesehen, dass eine Positionsregelung des Vorsatzgerätes in Querrichtung durch das Schwenken um die virtuelle Pendelachse unabhängig von zumindest einem durch die Erntemaschine angesteuerten, an der Aufnahmevorrichtung angeordneten Aktor zur Querführung des Vorsatzgerätes ist. Wesentlich ist die grundsätzliche Überlegung, dass das Vorsatzgerät in seinem Arbeitsbetrieb bzw. Erntebetrieb unabhängig von der Ansteuerung des zumindest einen Aktors an der Aufnahmevorrichtung um die virtuelle Pendelachse in Querrichtung schwenkt, um Ungleichmäßigkeiten der Bodenkontur auszugleichen, die zu einer einseitigen Veränderung einer voreingestellten Schnitthöhe führen.

Der zumindest eine an der Aufnahmevorrichtung angeordnete Aktor ist ansteuerbar, um diesen in eine Schwimmstellung zu überführen. Der zur aktiven Querführung durch die Ansteuerung der Erntemaschine betätigte Aktor wird in seiner Funktion neutral geschaltet, so dass das Vorsatzgerät unabhängig von der durch die Erntemaschine gesteuerten oder geregelten Querführung des Vorsatzgerätes mittels des zumindest einen Aktors ist.

Hierzu erfolgt die Positionsregelung des Vorsatzgerätes quer zur Fahrrichtung mittels des an dem jeweiligen lateralen Bereich angeordneten Stützrades, wobei die Druckbeaufschlagung der Hydraulikzylinder wechselseitig anpassbar ist, um druckgeregelt eine von einer Soll-Querlage des Vorsatzgerätes abweichende Ist-Querlage auszugleichen. Die Soll-Querlage entspricht dabei, bezogen auf die gesamte Arbeitsbreite des Vorsatzgerätes, einem einzuhaltenden mittleren vertikalen Abstand des frontseitigen Bereiches des Vorsatzgerätes zum Boden, bei dem die auf die Stützräder wirkenden hydraulischen Kräfte im Wesentlichen gleich sind. Die Ist-Querlage beschreibt, wiederum bezogen auf die gesamte Arbeitsbreite des Vorsatzgerätes, eine durch eine Änderung der Bodenkontur bedingte Abweichung des tatsächlichen vertikalen Abstands des frontseitigen Bereiches des Vorsatzgerätes zum Boden, der durch eine relative Auslenkung des Vorsatzgerätes um die virtuelle Pendelachse der Aufnahmevorrichtung ausgeglichen werden muss. Mittels der Druckregelung kann eine einem jeweiligen Hydraulikzylinder zugeordnete Ventilanordnung in der Weise angesteuert werden, dass der eine Hydraulikzylinder mit einem geringeren Druck beaufschlagt ist, d.h. entlastet ist, während der andere Hydraulikzylinder von der anderen Ventilanordnung mit einem höheren Druck beaufschlagt ist, d.h. stärker belastet ist. Dadurch kann das Vorsatzgerät wechselweise nach links oder rechts geschwenkt werden. Sobald die Anpassung der Ist-Querlage an die Soll-Querlage abgeschlossen wurde, werden beide Hydraulikzylinder wieder kontinuierlich geregelt, d.h. gleichmäßig mit Druck beaufschlagt.

Bevorzugt können die Hydraulikzylinder der Stützräder als doppeltwirkende Hydraulikzylinder ausgeführt sein.

Gemäß einer bevorzugten Weiterbildung kann eine Steuerungsvorrichtung vorgesehen sein, die zur druckgeregelten Ansteuerung einer dem jeweiligen Hydraulikzylinder zugeordneten Ventilanordnung eingerichtet ist, wobei die Ventilanordnung dazu eingerichtet ist, einen durch die Druckquelle bereitgestellten hydraulischen Druck im Hydraulikzylinder in Abhängigkeit von einem im Arbeitsbetrieb gewählten Betriebsmodus des Vorsatzgerätes zu regeln. Als Betriebsmodi können insbesondere eine Höhenregelung sowie eine Bodendruckregelung vorgesehen sein. Bei der Höhenregelung wird eine einzuhaltende vertikale Arbeitshöhe über dem Boden vorgegeben, in welchem der frontseitige Bereich des Vorsatzgerätes oberhalb des Bodens zu führen ist, was einer Aufnahmehöhe für abzuerntendes Erntegut entspricht. Hierzu werden an der Aufnahmevorrichtung vorgesehene Hydraulikzylinder angesteuert, welche die Aufnahmevorrichtung und das daran angeordnete Vorsatzgerät um eine zu dessen virtueller Pendelachse orthogonale Querachse in vertikaler Richtung verschwenken. Das Gesamtgewicht des Vorsatzgerätes wird von der Erntemaschine aufgenommen. Bei der Bodendruckregelung liegt das Vorsatzgerät auf dem Boden auf, wodurch eine anteilige Gewichtsentlastung erreicht wird. Während bei der Höhenregelung die Einhaltung des mittleren Abstands zum Boden durch das Nachführen in Querrichtung im Vordergrund steht, wird bei der Bodendruckregelung eine möglichst gleichmäßige Belastung des Bodens angestrebt, um beispielsweise ein Aufschieben zu vermeiden. Durch die Druckregelung ist gewährleistet, dass die Kraft, mit der sich die Stützräder am Boden abstützen, im Mittel konstant bleibt.

Die Steuerungsvorrichtung kann dazu eingerichtet sein, die dem jeweiligen Hydraulikzylinder zugeordnete Ventilanordnung in der Weise anzusteuern, dass der eine Hydraulikzylinder mit einem geringeren Druck beaufschlagt ist, d.h. entlastet ist, während der andere Hydraulikzylinder von der anderen Ventilanordnung mit einem höheren Druck beaufschlagt ist, d.h. stärker belastet ist. Die Steuerungsvorrichtung ist dazu eingerichtet, eine von einer Soll-Querlage des Vorsatzgerätes abweichende Ist-Querlage druckgeregelt auszugleichen.

Ein weiterer Vorteil der Druckregelung ergibt sich beim Ausheben des Vorsatzgerätes aus seiner Arbeitsposition im Arbeitsbetrieb bzw. Erntebetrieb in eine zum Boden beabstandete Position, in der die Stützräder ohne Bodenkontakt sind, beispielsweise am Vorgewende. Durch die Druckregelung werden die Hydraulikzylinder beim Ausheben des Vorsatzgerätes weiter ausgefahren, so dass das Vorsatzgerät zunächst weiter am Boden abgestützt wird. Erst mit dem Erreichen eines Endanschlags der Hydraulikzylinder kann ein Einfahren der Hydraulikzylinder angesteuert werden, um die Stützräder aus ihrer Arbeitsposition in ihre Transportstellung zu überführen.

Insbesondere kann die Steuerungsvorrichtung an dem Vorsatzgerät angeordnet sein.

Dabei kann die Steuerungsvorrichtung zur autonomen Ansteuerung der Ventilanordnungen eingerichtet sein. Die Steuerungsvorrichtung kann unabhängig von der Erntemaschine die Ventilanordnungen ansteuern, um das Vorsatzgerät bei einer Änderung der Bodenkontur in Querrichtung durch das Schwenken um die virtuelle Pendelachse der Aufnahmevorrichtung nachzuführen. Die autonom arbeitende Steuerungsvorrichtung kann aktiv das Nachführen des Vorsatzgerätes in Querrichtung steuern oder regeln.

Gemäß einer bevorzugten Weiterbildung können dem Vorsatzgerät mehrere voneinander unabhängig arbeitende Sensoreinrichtungen zugeordnet sein, welche dazu eingerichtet sind, den Abstand zwischen dem Vorsatzgerät und dem Boden zu erfassen. Insbesondere sind die Sensoreinrichtungen in geringstmöglichem Abstand zum frontseitige Bereich des Vorsatzgerätes angeordnet. Die geringe Beabstandung zum frontseitige Bereich des Vorsatzgerätes ermöglicht ein früheres Reagieren auf Änderungen der Bodenkontur, welche eine Anpassung der Querlage des Vorsatzgerätes erforderlich machen.

Insbesondere können dem jeweiligen Stützrad Sensoren zugeordnet sein, die zur Erfassung seiner Position relativ zum Vorsatzgerät und/oder des eingestellten Drucks in dem jeweiligen Hydraulikzylinder der Stützräder eingerichtet sind. Die Erfassung der Position relativ zum Vorsatzgerät ist von Bedeutung, um zu gewährleisten, dass bei einer Überführung des Vorsatzgerätes von einer Arbeitsposition in eine Transportposition die Stützräder um ihre in Querrichtung verlaufende Schwenkachse verschwenkbar sind. In der Transportposition können die jeweiligen Hydraulikzylinder vollständig eingezogen sein, so dass die Stützräder einen größtmöglichen Abstand zum Boden aufweisen.

Bevorzugt kann die Steuerungsvorrichtung zur Auswertung von Signalen der Sensoreinrichtungen zur Bestimmung der Ist-Querlage eingerichtet sein, um durch eine gegensinnige Ansteuerung der Ventilanordnungen bei der Druckbeaufschlagung der Hydraulikzylinder eine Korrektur der von der Soll-Querlage des Vorsatzgerätes abweichenden Ist-Querlage durch das Belasten oder Entlasten des jeweiligen Stützrades zu bewirken.

Durch die aktive Ansteuerung der Stützräder wird die Abweichung von der Soll-Querlage durch eine sich ändernde Bodenkontur bereits angepasst, wenn diese durch die im frontseitigen Bereich des Vorsatzgerätes angeordneten Sensoreinrichtungen detektiert wird. Der Abstand zwischen dem frontseitigen Bereich des Vorsatzgerätes und dem Boden wird optimal nachgeführt, was sich entsprechend positiv auf die Erntegutannahme bzw. - aufnahme auswirkt.

Durch eine kontinuierliche Regelung der Drücke in den Hydraulikzylindern der Stützräder stellt sich stets die optimale Position der Stützräder ein, auch wenn im Betriebsmodus Höhenregelung eine einzuhaltende vertikale Arbeitshöhe über dem Boden geändert wird. Zugleich wird durch die Druckregelung gewährleistet, dass die Kraft, mit der sich die Stützräder am Boden abstützen, im Mittel konstant bleibt.

Des Weiteren kann die Steuerungsvorrichtung dazu eingerichtet sein, anhand der Auswertung der Signale der Sensoreinrichtungen das Erreichen der Soll-Querlage zu bestimmen und die Ansteuerung der Ventilanordnungen gemäß dem gewählten Betriebsmodus fortzuführen.

Insbesondere können die Sensoreinrichtungen als Tastbügel oder als berührungslos arbeitende Abstandssensoren ausgeführt sein.

Gemäß einer bevorzugten Ausführungsform kann das Vorsatzgerät als ein Bandschneidwerk ausgeführt sein, welches einen Mittenabschnitt sowie zumindest zwei Seitenabschnitte, die jeweils durch ein Rahmengelenk mit dem Mittenabschnitt um eine parallel zur Längsachse der Erntemaschine verlaufende Schwenkachse schwenkbar verbunden sind, umfasst, wobei der jeweilige Seitenabschnitt mittels eines Aktors relativ zum Mittenabschnitt um die Schwenkachse quer zur Fahrrichtung schwenkbar ist.

Bei dem als Bandschneidwerk ausgeführten Vorsatzgerät können an dem Mittenabschnitt und den Seitenabschnitten um eine in Querrichtung verlaufende Achse schwenkbare Tragarme angeordnet sein, die einen sich über die Breite des Bandschneidwerkes erstreckenden flexiblen Messerbalken tragen, wobei zur Erfassung einer vertikale Auslenkung der Tragarme des Mittenabschnitts und der Seitenabschnitte um die in Querrichtung verlaufende Achse mehrere Sensoreinrichtungen vorgesehen sind, die als eine mit den Tragarmen des Mittenabschnitts drehfest verbundene Messwelle und als zumindest eine mit den Tragarmen des jeweiligen Seitenabschnitts drehfest verbundene Messwelle und daran angeordneten Potentiometern ausgeführt sind. Die jeweilige Messwelle ist durch die Tragarme vom flexiblen Messerbalken beabstandet. Bei dem Bandschneidwerk können die Messwellen mit den daran angeordneten Potentiometern zur Bestimmung des Abstands zwischen Vorsatzgerät und Boden zur Anwendung kommen. Dies ist insbesondere dann der Fall, wenn das Bandschneidwerk im sogenannten Flex-Modus betrieben wird. In diesem Betriebsmodus können die den flexiblen Messerbalken tragenden Tragarme, ausgehend von einer horizontalen Mittenstellung durch Änderungen der Bodenkontur quer zur Bewegungsrichtung des von der Erntemaschine getragenen Vorsatzgerätes in vertikaler Richtung, auch innerhalb eines Seitenabschnittes, zumindest abschnittsweise nach unten und/oder oben ausgelenkt werden. Die durch das Auslenken erzeugte translatorische Bewegung der Tragarme erzeugt eine Drehbewegung der Messwellen, welche durch die an den Messwellen angeordneten Potentiometer erfasst wird. Die Auswertung der Signale der Potentiometer erfolgt analog zur Signalauswertung bei als Tastbügeln ausgeführten Sensoreinrichtungen.

Die vorliegende Erfindung wird nachstehend anhand eines in den Zeichnungen dargestellten Ausführungsbeispieles näher erläutert.

Es zeigen:
- Fig. 1: schematisch und exemplarisch einen vorderen Aufbau einer selbstfahrenden Erntemaschine;
- Fig. 2: eine Ansicht einer Aufnahmevorrichtung der Erntemaschine von vorn;
- Fig. 3: einen exemplarischen Schaltplan für eine Ansteuerung von Stützrädern des Vorsatzgerätes; und
- Fig. 4: schematisch und exemplarisch eine Teilansicht eines als Bandschneidwerk ausgeführten Vorsatzgerätes.

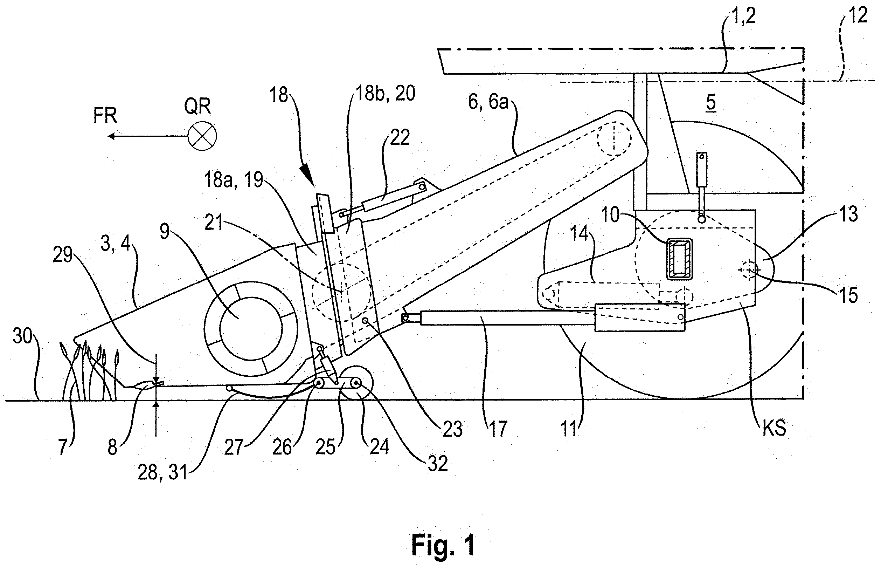

Die Darstellung in Fig. 1 zeigt den prinzipiellen vorderen Aufbau einer als Mähdrescher 2 ausgeführten selbstfahrenden Erntemaschine 1 mit einem Vorsatzgerät 3, welches im dargestellten Ausführungsbeispiel als ein Getreideschneidwerk 4 ausgeführt ist. Das Vorsatzgerät 3 ist mittels einer als Schrägförderer 16 ausgeführten Aufnahmevorrichtung 6 an einem Maschinenrahmen 5 der Erntemaschine 1 angeordnet. Die Begriffe Aufnahmevorrichtung 6 und Schrägförderer 16 werden nachfolgend synonym verwendet. An dem Maschinengehäuse 5 ist die Aufnahmevorrichtung 6 um eine quer zur Vorwärtsfahrtrichtung FR der Erntemaschine 1 verlaufende Schwenkachse schwenkbar gelagert. Der Schrägförderer 16 fördert das Erntegut 7 zum einem nicht dargestellten Dreschwerk als ein Arbeitsaggregat der der Erntemaschine 1. An dem Vorsatzgerät 3 befindet sich ein Messerbalken 8 und ein Querförderer 9, die dazu dienen, das Erntegut 7 vor die einlaufseitige Öffnung des Schrägförderers 16 zu transportieren. Mit dem Maschinengehäuse 5 ist eine Vorderachse 10 der Erntemaschine 1 starr verbunden. Die Laufräder 11 sind an der Vorderachse 10 höhenverstellbar gelagert, so dass eine horizontale Ausrichtung der im Maschinengehäuse 5 gelagerten Aggregate für die Ernte am Hang möglich ist. Dazu ist die Erntemaschine 1 mit zwei Radgetrieben 13 ausgestattet, welche über Konsolen KS mit den Enden der Vorderachse 10 schwenkbar verbunden sind. An den Konsolen KS stützen sich Kolbenzylindereinheiten 14 ab, deren Kolbenstangen an den Radgetrieben 13 angreifen, die ihrerseits um feste Achsen 15 in den Konsolen KS verschwenkbar sind. Mit 12 ist eine Längsachse der Erntemaschine 1 bezeichnet.

Die Aufnahmevorrichtung 6 und das an der Aufnahmevorrichtung 6 angeordnete Vorsatzgerät 3 werden durch Kolbenzylindereinheiten 17, welche mit einem Ende an der Unterseite der Aufnahmevorrichtung 6 und mit ihrem anderen Ende im Bereich der Vorderachse 10 befestigt sind, angehoben bzw. abgesenkt. Die Ankopplung des Vorsatzgeräts 3 erfolgt über eine Verschwenkeinrichtung 18. Eine solche Verschwenkeinrichtung 18 ist in der DE 10 2019 111 587 A1 offenbart, auf deren Offenbarungsgehalt vollumfänglich Bezug genommen wird. Die Verschwenkeinrichtung 18 besteht aus einer als Pendelrahmen 18a ausgeführten vorsatzgerätseitigen Rahmenstruktur 19 und einer als Kipprahmen 18b ausgeführten erntefahrzeugseitigen Rahmenstruktur 20. Der Pendelrahmen 18a ist gegenüber dem Kipprahmen 18b um eine virtuelle, sich etwa in Vorwärtsrichtung VR erstreckende Pendelachse 21 verschwenkbar gelagert und erlaubt es dem Vorsatzgerät 3 gegenüber der Aufnahmevorrichtung 6 um die virtuelle Pendelachse 21 zu pendeln. Die virtuelle Pendelachse 21 bildet sich im Mittelpunkt des Pendelrahmens 18a aus. Der Kipprahmen 18b ist an der Aufnahmevorrichtung 6 mit einer Kolbenzylindereinheit 22 um eine untere Querachse 23 schwenkbar gelagert, so dass ein Schnittwinkel des Vorsatzgeräts 3 in Maschinenlängsrichtung verstellbar ist.

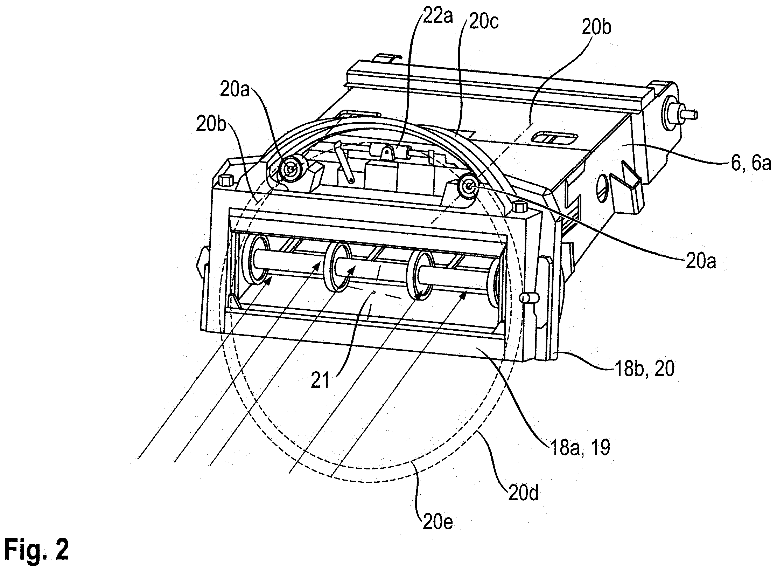

In Fig. 2 ist eine Ansicht der Aufnahmevorrichtung 6 der Erntemaschine 1 von vorn dargestellt. Der Kipprahmen 18b haltert im oberen Bereich zwei Tragrollen 20a, die um ihre sich parallel zur Richtung der virtuellen Pendelachse 21 erstreckenden Achsen 20b drehbar sind. Auf den Tragrollen 20a liegt ein Auflageelement 20c an, welches sich entlang einer Kreisbahn 20d erstreckt, welche wiederum konzentrisch zur virtuellen Pendelachse 21 angeordnet ist und mit dem Pendelrahmen 18a verbunden ist. Die beschriebene Anordnung der Tragrollen 20a ermöglicht es dem Pendelrahmen 18a um die virtuelle Pendelachse 21 zu pendeln. In dem dargestellten Ausführungsbeispiel sind zwei Tragrollen 20a am Kipprahmen 18b symmetrisch zur Längsmittelebene des Kipprahmens 18b auf einer sich konzentrisch zur virtuellen Pendelachse 21 erstreckenden Kreisbahn 20e gelagert.

Zum aktiven Verschwenken des Vorsatzgeräts 3 um die Pendelachse 21 ist ein als Schwenkzylinder ausgeführter Aktor 22a zwischen den Pendelrahmen 18a und den Kipprahmen 18b befestigt, sodass der Schwenkzylinder 22a den Pendelrahmen 18a gegenüber den Kipprahmen 18b aktiv um die virtuelle Pendelachse 21 verschwenken kann. Dieser befindet sich während des Arbeitsbetriebs bzw. Erntebetriebs in einer Schwimmstellung, so dass das Vorsatzgerät 3 freischwingend an dem Erntefahrzeug 1 befestigt ist. Für das aktive Verschwenken des Vorsatzgerätes 3 wird der Schwenkzylinder 22a an der Aufnahmevorrichtung 6 durch eine Steuereinheit des Mähdreschers 2 angesteuert, um das Vorsatzgerät 3 in ausgehobener Position, in welcher an dem Vorsatzgerät angeordnete Stützräder 24 keinen Bodenkontakt haben, in eine waagerechte Stellung zu überführen und zu halten.

Ein erforderlicher Querausgleich, welcher das Verschwenken des Vorsatzgeräts 3 um die virtuelle Pendelachse 21 zur Anpassung der Position des Vorsatzgeräts 3 an sich ändernde Bodenkonturen beschreibt, erfolgt während des Arbeitsbetriebs bzw. Erntebetriebs durch zwei höhenverstellbare Stützräder 24. Hierfür sind im Ausführungsbeispiel zwei Halterungen 25 um eine sich quer zur Vorwärtsfahrtrichtung FR erstreckende Achse 26 schwenkbar am Vorsatzgerät 3 befestigt. Die Halterungen 25 sind im äußeren lateralen Bereich des Vorsatzgeräts 3 befestigt und symmetrisch zur Längsmittelebene des Vorsatzgeräts 3 angeordnet, welche im Ausführungsbeispiel der Längsmittelebene des Pendelrahmens 18a entspricht. Mittels jeweils eines Hydraulikzylinders 27, der an dem Vorsatzgerät 3 und der Halterung 25 befestigt ist, wird die Halterung 25 verschwenkt. Angesteuert werden die Hydraulikzylinder 27, die insbesondere als doppeltwirkende Hydraulikzylinder ausgeführt sind, im Ausführungsbeispiel mittels Sensoreinrichtungen 28, mit denen ein Abstand 29 des Messerbalkens 8 als frontseitiger Bereich des Vorsatzgeräts 3 und Boden 30 in an sich bekannter Weise laufend gemessen wird. Bei den Sensoreinrichtungen 28 handelt es sich im dargestellten Ausführungsbeispiel um schwenkbewegliche Tastbügel 31. Die Tastbügel 31 sind an der Unterseite des Vorsatzgerätes 4 angeordnet. Die Distanz der Anordnung der Tastbügel 31 zum Messerbalken 8 ist möglichst gering gewählt, um frühzeitig auf Änderungen der Bodenkontur reagieren zu können. Alternativ können die Sensoreinrichtungen 28 berührungslos arbeiten. An der Halterung 25 sind die Stützräder 24 drehbar um eine sich quer zur Vorwärtsfahrtrichtung VR erstreckende Achse 32 befestigt. Die Stützräder 24 werden, in Abhängigkeit von einem für das Vorsatzgerät 3 gewählten Betriebsmodus, während des Arbeitsbetriebs über den Boden 30 geführt und anhand der Sensorsignale der Sensoreinrichtungen 28 in der Weise angesteuert, dass die Position des Vorsatzgeräts 3 an vorhandene Bodenkonturen angepasst wird.

Einen Betriebsmodus bildet die Schnitthöhenregelung, bei welchem der einzuhaltende Abstand 29 des Messerbalkens 8 zum Boden 30 vorgegeben ist und durch eine Ansteuerung der Kolbenzylindereinheiten 17 eingestellt wird.

Einen weiteren Betriebsmodus bildet die sogenannte Bodendruckregelung. Im Betriebsmodus Bodendruckregelung liegt das Vorsatzgerät 3 auf dem Boden 30 auf, so dass das Eigengewicht des Vorsatzgerät 3 anteilig auf den Boden übertragen wird.

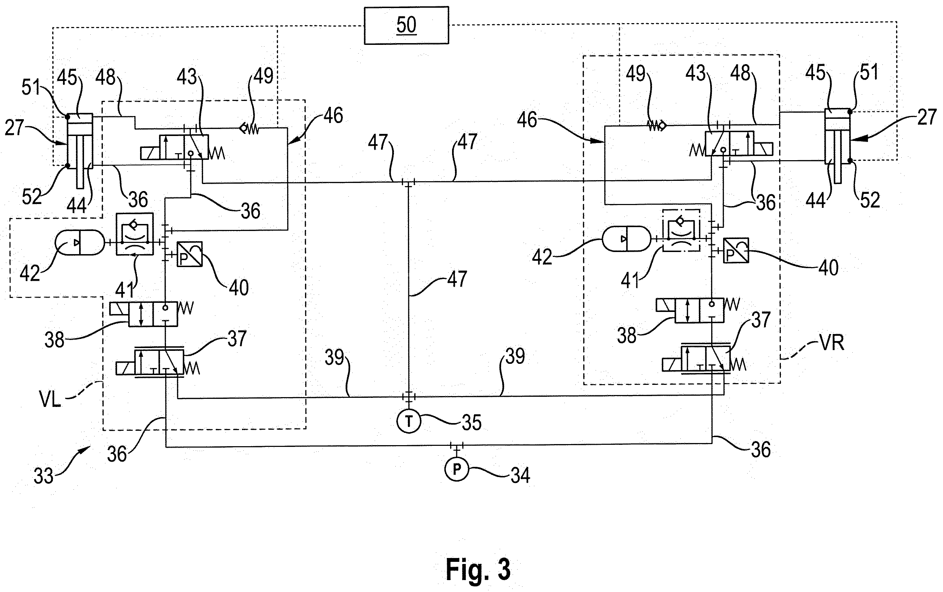

In Fig. 3 ist ein exemplarischer Schaltplan für eine Ansteuerung der Stützräder 24 des Vorsatzgerätes 3 dargestellt. Zur Ansteuerung der außenseitig angeordneten Stützräder 24 ist ein Hydrauliksystem 33 an dem Vorsatzgerät 3 vorgesehen, welches eine gemeinsame Druckquelle 34 sowie einen gemeinsamen Tank 35 umfasst. Der Aufbau des Hydrauliksystems 33 ist spiegelbildlich für die einander lateral gegenüberliegend angeordneten Stützräder 24 des Vorsatzgerätes 3 ausgeführt, so dass die nachfolgende Beschreibung der weiteren Komponenten des Hydrauliksystems 33 für beide lateral am Vorsatzgerätes 3 angeordnete Stützräder 24 Gültigkeit hat. Dem jeweiligen Hydraulikzylinder 27 ist eine Ventilanordnung VL, VR zugeordnet, welche nachstehend erläutert wird.

Von der gemeinsamen Druckquelle 34, die eine Hydraulikpumpe der selbstfahrenden Erntemaschine 1 sein kann, führt eine Druckleitung 36 zu einem als 3/2-Wege Proportionalventil ausgeführten schaltbaren Ventil 37 und einem diesem nachgeschalteten optionalen 2/2-Wegeventil 38, welches einfach dicht ausgeführt ist. Durch das optionale 2/2-Wegeventil 38 kann ein Leckagestrom durch Abfließen von Hydraulikfluid über das schaltbare Ventil 37 verhindert werden. Das schaltbare Ventil 37 kann, wie in Fig. 5 dargestellt, einen Schaltzustand einnehmen, in welchem die Druckleitung 36 über eine Hydraulikleitung 39 mit dem Tank 35 verbunden ist. Das 2/2-Wegeventil 38 befindet sich in einer Schaltstellung, in der das Abfließen von Hydraulikfluid aus der Druckleitung 36 über das schaltbare Ventil 37 in den Tank 35 verhindert wird.

Ein dem als 3/2-Wege Proportionalventil ausgeführten schaltbaren Ventil 37 bzw. dem 2/2-Wegeventil 38 nachgeordneter Drucksensor 40 überwacht den Hydraulikdruck in der Druckleitung 36. Dem jeweiligen Hydraulikzylinder 27 ist ein Drosselrückschlagventil 41 mit einem Druckspeicher 42 zugeordnet, welches in der die gemeinsame Druckquelle 34 des Hydrauliksystems 33 mit dem Hydraulikzylinder 27 verbindenden Druckleitung 36 angeordnet ist.

Weiterhin ist dem Hydraulikzylinder 27 ein 3/2-Wegeventil 43 zugeordnet, welches im Erntebetrieb des Vorsatzgerätes 3 durch Bestromung einen Schaltzustand einnimmt, in welchem Kolbenstangenraum 44 und Kolbenraum 45 des Hydraulikzylinders 27 fluidleitend verbunden sind. Durch die fluidleitende Verbindung von Kolbenstangenraum 44 und Kolbenraum 45 des doppeltwirkenden Hydraulikzylinders 27 wird ein gemeinsamer geschlossener Hydraulikkreislauf 46 ausgebildet. Der jeweilige Hydraulikkreislauf 46 kann von der Druckquelle 34 gespeist werden. Im Betrieb des Vorsatzgerätes 3, d.h. während eines Erntevorgangs, bewirkt die den Kolbenstangenraum 44 und den Kolbenraum 45 miteinander fluidleitend verbindende Schaltstellung des 3/2-Wegeventils 43, dass, sobald Kolbenraum 45 und Kolbenstangenraum 46 miteinander verbunden sind, sich der Hydraulikzylinder 27 lediglich durch äußere Einflüsse bewegt, insbesondere durch Bodenunebenheiten. Dabei kann aus dem Kolbenraum 45 verdrängtes Hydraulikfluid über das 3/2-Wegeventil 43 in den Druckspeicher 42 fließen. Das Differenzvolumen wird je nach Zylinderbewegung aus dem Druckspeicher 42 entnommen, oder in diesen zurückgeschoben. Dies kann alternativ auch durch die Verwendung zweier 2/2-Wegeventile anstelle des 3/2-Wegeventils 43 erreicht werden.

In der in Fig. 3 dargestellten Schaltstellung des 3/2-Wegeventils 43 wird der doppeltwirkende Hydraulikzylinder 27 bei einer Druckbeaufschlagung durch Schalten der Ventile 37 und 38 angesteuert, um das jeweilige Stützrad 24 in eine ausgehobene Stellung, beispielsweise am Vorgewende oder zu Transportzwecken, zu überführen. In der ausgehobenen Stellung haben die Stützräder 24 keinen Bodenkontakt.

Im laufenden Erntebetrieb befindet sich das 3/2-Wegeventil 43 in der - nicht dargestellten - Schaltstellung, in welcher der Kolbenstangenraum 44 und der Kolbenraum 45 des Hydraulikzylinders 27 fluidleitend miteinander verbunden sind. Druckschwankungen aufgrund von Stößen, die über die Stützräder 24 auf den jeweiligen Hydraulikzylinder 27 übertragen werden, fließen über das 3/2-Wegeventil 43 in den diesem nachgeordneten Druckspeicher 42 und werden kompensiert. Zur kontinuierlichen Druckregelung des jeweiligen Hydraulikzylinders 27 werden das schaltbare Ventil 37 und das 2/2-Wegeventil 38 der Ventilanordnungen VL, VR durch eine Steuerungsvorrichtung 50 angesteuert. Die Steuerungsvorrichtung 50 ist dazu eingerichtet, die Ventilanordnungen VL, VR sowohl gleichzeitig als auch unabhängig voneinander anzusteuern. Bei der kontinuierlichen Druckregelung werden die Drücke in den beiden Hydraulikzylinder 27 auf einen gleichen Wert geregelt.

Weiterhin wird der jeweilige Hydraulikzylinder 27 im laufenden Erntebetrieb mittels des schaltbaren Ventils 37 und des 2/2-Wegeventils 38 angesteuert, wenn durch eine Änderung der Bodenkontur oder das Erreichen eines Hangs das Nachführen des Vorsatzgerätes 3 in Querrichtung QR durch das Schwenken um die virtuelle Pendelachse 21 der Aufnahmevorrichtung 6 erforderlich ist, was weiter unten näher erläutert wird.

Der Kolbenraum 45 ist durch eine Ausgleichsleitung 48 über das schaltbare 3/2-Wegeventil 43 sowie optional über ein Rückschlagventil 49 unmittelbar mit der Druckleitung 36 verbunden. Das in der Ausgleichsleitung 48 angeordnete optionale Rückschlagventil 49 verhindert, dass von der Druckleitung 36 unter Umgehung des 3/2-Wegeventils 43 Hydraulikfluid in den Kolbenraum 45 gelangt.

Das 3/2-Wegeventil 43 verbindet in der dargestellten Schaltstellung über die Hydraulikleitung 47 die Ausgleichsleitung 48 mit dem Tank 35. In dieser Schaltstellung lässt sich der Hydraulikzylinder 27 vollständig einfahren, um das Stützrad 24 in seine Transportstellung zu überführen. Gleiches gilt für das Erreichen eines Vorgewendes während des Erntebetriebes, indem durch das Schalten des 3/2-Wegeventils 43 der Kolbenraum 45 mit dem Tank 35 verbunden wird, um das Ausheben des Stützrades 24 zu bewirken.

Hier und vorzugsweise ist eine Steuerungsvorrichtung 50 vorgesehen, die an dem Vorsatzgerät 3 angeordnet ist. Die Steuerungsvorrichtung 50 ist zur Ansteuerung der dem jeweiligen Hydraulikzylinder 27 zugeordneten Ventilanordnung VL, VR eingerichtet, welche jeweils die Ventile 37, 38 und 43 umfasst, wobei die jeweilige Ventilanordnung VL, VR dazu eingerichtet ist, einen durch die Druckquelle 34 bereitgestellten hydraulischen Druck im Hydraulikzylinder 27 in Abhängigkeit von einem gewählten Betriebsmodus des Vorsatzgerätes 3 zu regeln.

An dem jeweiligen Hydraulikzylinder 27 sind Sensoren 51, 52 angeordnet sind, die zur Erfassung seiner Position relativ zum Vorsatzgerät 3 und/oder des eingestellten Drucks in dem jeweiligen Hydraulikzylinder 27 der Stützräder 24 eingerichtet sind. Die Signale der Sensoren 51, 52 werden an die Steuerungsvorrichtung 50 zur Auswertung übertragen.

Die Steuerungsvorrichtung 50 ist insbesondere zur autonomen Ansteuerung der Ventilanordnungen VL, VR des jeweiligen Hydraulikzylinders 27 eingerichtet. Die Steuerungsvorrichtung 50 kann unabhängig von der Erntemaschine 1 die jeweilige Ventilanordnung VL, VR des jeweiligen Hydraulikzylinders 27 ansteuern, um das Vorsatzgerät 3 bei einer Änderung der Bodenkontur in Querrichtung QR durch das freie Schwenken um die virtuelle Pendelachse 21 der Aufnahmevorrichtung 6 nachzuführen. Die autonom arbeitende Steuerungsvorrichtung 50 kann aktiv das Nachführen des Vorsatzgerät 3 in Querrichtung QR steuern oder regeln, indem die Stützräder 24 durch eine Änderung der Druckbeaufschlagung des jeweiligen Hydraulikzylinders 27 unterschiedlich stark einfedern. Mittels der Druckregelung wird beispielsweise die Ventilanordnung VL in der Weise angesteuert, dass der korrespondierende Hydraulikzylinder 27 mit einem geringeren Druck beaufschlagt ist, d.h. entlastet ist, während der Hydraulikzylinder 27 durch eine entsprechende Ansteuerung der Ventilanordnung VR mit einem höheren Druck beaufschlagt ist, d.h. stärker belastet ist. Dadurch wird das Vorsatzgerät 3 nach links geschwenkt. Um das Vorsatzgerät nach rechts zu schwenken, wird entsprechend der Hydraulikzylinder 27 durch eine Ansteuerung der Ventilanordnung VR entlastet und der Hydraulikzylinder 27 durch eine entsprechende Ansteuerung der Ventilanordnung VL belastet. Sobald die Anpassung einer Ist-Querlage an eine Soll-Querlage abgeschlossen wurde, werden beide Hydraulikzylinder wieder kontinuierlich geregelt, d.h. gleichmäßig mit Druck beaufschlagt.

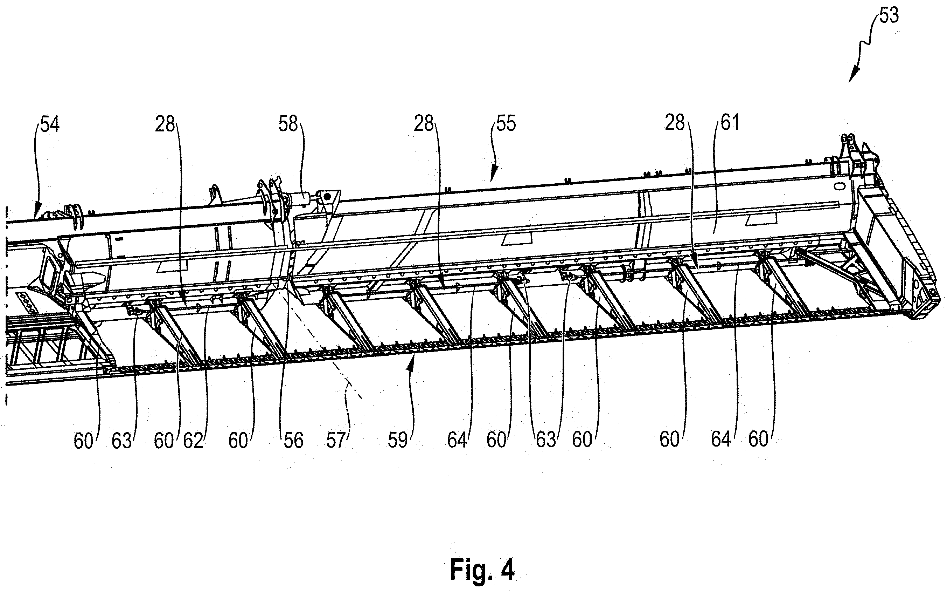

Fig. 4 zeigt schematisch und exemplarisch eine Teilansicht eines als Bandschneidwerk 53 ausgeführten Vorsatzgerätes 3. Der Aufbau des Bandschneidwerks 53 ist spiegelsymmetrisch, so dass die nachfolgenden Ausführungen für die nicht dargestellte Hälfte des Bandschneidwerks 53 entsprechend gelten. Das Bandschneidwerk 53 umfasst einen Mittenabschnitt 54 sowie zumindest zwei Seitenabschnitte 55, von denen in Fig. 4 lediglich einer gezeigt ist. Zur Förderung des aufgenommenen Erntegutes sind - nicht dargestellte - Förderbänder vorgesehen, welche in bekannter Weise das Erntegut von den Seitenabschnitten 55 seitwärts zum Mittenabschnitt 54 fördern. Der jeweilige Seitenabschnitt 55 ist durch jeweils ein Rahmengelenk 56 mit dem Mittenabschnitt 54 um eine parallel zur Fahrtrichtung FR orientierten und im Wesentlichen horizontal verlaufenden Schwenkachse 57 schwenkbar verbunden. Der jeweilige Seitenabschnitt 55 ist mittels eines Aktors 58 relativ zum Mittenabschnitt 54 um die Schwenkachse 57 in vertikaler Richtung schwenkbar.

Im frontseitigen Bereich des als Bandschneidwerk 53 ausgeführten Vorsatzgerätes 3 ist ein flexibler Messerbalken 59 angeordnet, der sich im Wesentlichen über die Gesamtbreite des Bandschneidwerks 53 erstreckt. Eine Mehrzahl von über die Breite des Bandschneidwerks 53 verteilt angeordneter Tragarme 60, die mit einem Ende um eine quer zur Fahrtrichtung FR verlaufende Achse schwenkbar am in den Mittenabschnitt 54 sowie die zumindest zwei Seitenabschnitte 55 unterteilten bzw. segmentierten Rahmen 61 des Bandschneidwerks 53 angeordnet sind, tragen den Messerbalken 59. Durch die Schwenkbarkeit der Tragarme 60 kann der flexible Messerbalken 59 in vertikaler Richtung eine Ausgleichsbewegung ausführen, um auf eine Änderung der Bodenkontur zu reagieren. Dabei kann der Messerbalken 59 eine im Wesentlichen wellenförmige Auslenkung erfahren.

Die Tragarme 60 des Mittenabschnitts 54 sind durch eine Messwelle 62, die drehfest mit dem jeweiligen Tragarm 60 verbunden ist, miteinander verbunden. An der Messewelle 62 ist zumindest ein Potentiometer 63 angeordnet, durch welches die vertikale Auslenkung der durch die Messwelle 62 miteinander verbunden Tragarme 60 erfasst wird. Die Tragarme 60 der Seitenabschnitte 55 sind ebenfalls durch zumindest eine Messwelle 64, die drehfest mit dem jeweiligen Tragarm 60 verbunden ist, miteinander verbunden. Hier und vorzugsweise sind zumindest zwei Messwellen 64 an jedem Seitenabschnitt 55 vorgesehen. An der jeweiligen Messewelle 64 ist ebenfalls zumindest ein Potentiometer 63 angeordnet. Die Messwellen 62, 64 und die zugehörigen Potentiometer 63 bilden ebenfalls Sensoranordnungen 28, mit denen der Abstand 29 des Messerbalkens 59 als frontseitiger Bereich des Bandschneidwerks 53 und dem Boden 30 in an sich bekannter Weise laufend gemessen wird.

Die jeweilige Messwelle 64 verbindet nur einen Teil der Tragarme 60 des jeweiligen Seitenabschnitts 55 miteinander, so dass die Anzahl der Messstellen über die Breite des Bandschneidwerkes 53 erhöht wird. Durch die drehfeste Verbindung der Tragarme 60 mit der jeweiligen Messwelle 62, 64 wird die Auslenkung desjenigen Tragarms 60 bei der Bestimmung der Höhenposition herangezogen, welcher die größte Auslenkung in vertikaler Richtung aufgrund der Bodenkontur erfahren hat. Die Signale der Messwellen 62, 64 werden analog den Signalen der als Tastbügel 31 ausgeführten Sensoreinrichtungen 28 durch die Steuerungsvorrichtung 50 am Vorsatzgerät 3 ausgewertet und zur Ansteuerung der Ventilanordnungen VL, VR respektive der Druckregelung der Hydraulikzylinder 27 verwendet.

Wie weiter oben ausgeführt, lassen sich die Seitenabschnitte 55 durch die Aktoren 58 um die Schwenkachse 57 quer zur Fahrrichtung FR, d.h. in Querrichtung QR schwenken. In seiner Gesamtheit wird das Bandschneidwerk 53 durch die lateral angeordneten Stützräder 24 gegenüber dem Boden 30 abgestützt. Das Bandschneidwerk 53 ist hierzu wie das eingangs genannte Getreideschneidwerk 4 mit dem bereits beschriebenen Hydrauliksystem 33 ausgeführt.

Die druckgeregelte Positionsregelung des Vorsatzgerätes 3 respektive des Bandschneidwerks 53 in Querrichtung QR erfolgt mittels der lateral angeordneten Stützräder 24, welche wechselweise druckentlastet oder druckbelastet werden, um eine von einer Soll-Querlage des Vorsatzgerätes 3 respektive des Bandschneidwerks 53 abweichende Ist-Querlage auszugleichen. Durch diese Regelung soll die durch die Kolbenzylindereinheit 17 vorgegebene Schnitthöhe, d.h. der Abstand 29 zwischen Messerbalken 8 bzw. 59 und Boden 30, im Mittel optimal nachgeführt werden. Ebenso soll der Druck in den Hydraulikzylindern 27, mit dem die Stützräder 24 gegen den Boden 30 gepresst werden, im Mittel konstant gehalten werden.

Hierzu ist die Steuerungsvorrichtung 50 vorgesehen, die zur Ansteuerung der dem jeweiligen Hydraulikzylinder 27 zugeordneten Ventilanordnung VL, VR eingerichtet ist. Die jeweilige Ventilanordnung VL, VR ist dazu eingerichtet, einen durch die Druckquelle 34 bereitgestellten hydraulischen Druck im Hydraulikzylinder 27 in Abhängigkeit von dem gewählten Betriebsmodus, der Schnitthöhenregelung, der Bodendruckregelung sowie im Fall des Bandschneidwerkes 53 der flexiblen Regelung des Messerbalkens 59, gemäß der der Messerbalken 59 des Bandschneidwerks 53 mittels der Schwenkbaren Tragarme 60 der Bodenkontur folgt, des Vorsatzgerätes 3 zu regeln. Durch die Ansteuerung der jeweiligen Ventilanordnung VL, VR lassen sich die Stützräder 24 gegensinnig betätigen sowie unabhängig voneinander ein- und ausfahren.

Beim Absenken des Vorsatzgerätes 3 in seine Arbeitsposition, die entsprechend des gewählten Betriebsmodus vorgegeben ist, werden die Stützräder 24 druckgeregelt ausgefahren. Die Drücke in den Hydraulikzylindern 27 der sich am Boden 30 abstützenden Stützräder werden im laufenden Betrieb weiterhin kontinuierlich geregelt. Die Drucküberwachung erfolgt durch die Sensoren 52 des jeweiligen Hydraulikzylinders 27. Wird bei der Auswertung der Signale der Sensoranordnungen 28 festgestellt, dass die Ist-Querlage des Vorsatzgerätes 3, beispielsweise durch das Erreichen eines Hangabschnitts, angepasst werden muss, werden die Hydraulikzylinder 27 der Stützräder 24 wechselseitig entlastet, so dass sich die erforderliche Anpassung an die einzuhaltende Soll-Querlage einstellt. Hierzu wird, wenn das Vorsatzgerät 3 nach links geschwenkt werden muss, das linke Stützrad 24 durch die Ansteuerung der Ventilanordnung VL entlastet, sodass sich die vom Hydraulikzylinder 27 auf das Stützrad 24 aufgebrachte Druckkraft reduziert, und das rechte Stützrad 24 durch die Ansteuerung der Ventilanordnung VR durch Druckbeaufschlagung zusätzlich belastet, so dass die von dem Hydraulikzylinder 27 auf das Stützrad 24 aufgebrachte Druckkraft zunimmt. Mit dem Erreichen der Soll-Querlage werden die Drücke in den Hydraulikzylinder 27 wieder kontinuierlich, d.h. durch gleichmäßige Druckbeaufschlagung, geregelt.

Beim Ausheben des Vorsatzgerätes 3 beispielsweise am Vorgewende, werden die Drücke in den Hydraulikzylinder 27 weiterhin druckgeregelt. Dies führt dazu, dass die Hydraulikzylinder weiter ausfahren, bis sie ihre Endlage erreichen. Mit dem Erreichen der Endlage werden die Hydraulikzylinder 27 druckgeregelt eingezogen.

Die erfindungsgemäße Erntemaschine ermöglicht es, die Regelung der Querlage des Vorsatzgerätes 3, unabhängig von einer Ausführung als starres Getreideschneidwerk 4 oder als flexibles Bandschneidwerk 53, unabhängig von dem zumindest einen durch die Erntemaschine 1 angesteuerten, an der Aufnahmevorrichtung 6 angeordneten, als Schwenkzylinder ausgeführten Aktor 22a zur Querführung des Vorsatzgerätes 3 durchzuführen. Im Arbeitsbetrieb bzw. Erntebetrieb des Vorsatzgerätes 3 erfolgt die Steuerung bzw. Regelung der Querführung ausschließlich mittels der druckgeregelten Hydraulikzylinder 27 der Stützräder 24.

**Bezugszeichenliste**

| | | | |
|---|---|---|---|
| 1 | Erntemaschine | 26 | Achse |
| 2 | Mähdrescher | 27 | Hydraulikzylinder |
| 3 | Vorsatzgerät | 28 | Sensoreinrichtung |
| 4 | Getreideschneidwerk | 29 | Abstand |
| 5 | Maschinenrahmen | 30 | Boden |
| 6 | Aufnahmevorrichtung | 31 | Tastbügel |
| 7 | Erntegut | 32 | Achse |
| 8 | Messerbalken | 33 | Hydrauliksystem |
| 9 | Querförderer | 34 | Druckquelle |
| 10 | Vorderachse | 35 | Tank |
| 11 | Laufräder | 36 | Druckleitung |
| 12 | Längsachse | 37 | Ventil |
| 13 | Radgetriebe | 38 | 2/2-Wegeventil |
| 14 | Kolbenzylindereinheit | 39 | Hydraulikleitung |
| 15 | Achse | 40 | Drucksensor |
| 16 | Schrägförderer | 41 | Drosselrückschlagventil |
| 17 | Kolbenzylindereinheit | 42 | Druckspeicher |
| 18 | Verschwenkeinrichtung | 43 | 3/2-Wegeventil |
| 18a | Pendelrahmen | 44 | Kolbenstangenraum |
| 18b | Kipprahmen | 45 | Kolbenraum |
| 19 | Rahmenstruktur | 46 | Hydraulikkreislauf |
| 20 | Rahmenstruktur | 47 | Hydraulikleitung |
| 20a | Tragrolle | 48 | Ausgleichsleitung |
| 20b | Achse | 49 | Rückschlagventil |
| 20c | Achse | 50 | Steuerungsvorrichtung |
| 20d | Kreisbahn | 51 | Sensor |
| 20e | Kreisbahn | 52 | Sensor |
| 21 | Virtuelle Pendelachse | 53 | Bandschneidwerk |
| 22 | Kolbenzylindereinheit | 54 | Mittenabschnitt |
| 22a | Aktor/Schwenkzylinder | 55 | Seitenabschnitt |
| 23 | Querachse | 56 | Rahmengelenk |
| 24 | Stützrad | 57 | Schwenkachse |
| 25 | Halterung | 58 | Aktor |
| 59 | | Messerbalken | |
| 60 | | Tragarm | |
| 61 | | Rahmen | |
| 62 | | Messewelle | |
| 63 | | Potentiometer | |
| 64 | | Messwelle | |
| FR | | Vorwärtsfahrtrichtung | |
| KS | | Konsole | |
| QR | | Querrichtung | |
| VL | | Ventilanordnung | |
| VR | | Ventilanordnung | |

## Patentansprüche

1. Selbstfahrende Erntemaschine (1) mit einer höhenverstellbaren Aufnahmevorrichtung (6), an der ein um eine virtuelle Pendelachse (21) der Aufnahmevorrichtung (6) schwenkbares Vorsatzgerät (3) zur Aufnahme von Erntegut (7) angeordnet ist, wobei die Aufnahmevorrichtung (6) zur adaptiven Einstellung eines vertikalen Abstands des Vorsatzgerätes (29) zum Boden (30) eingerichtet ist, wobei zumindest an den äußeren lateralen Bereichen des Vorsatzgerätes (3) jeweils zumindest ein Stützrad (24) angeordnet ist, welches jeweils durch einen an einen Hydraulikkreislauf eines eine Druckquelle (34) aufweisenden Hydrauliksystems (33) angeschlossenen Hydraulikzylinder (27) höhenbeweglich geführt ist, wobei eine Positionsregelung des Vorsatzgerätes (3) in Querrichtung (QR) im Erntebetrieb durch das Schwenken um die virtuelle Pendelachse (21) unabhängig von zumindest einem durch die Erntemaschine (1) angesteuerten, an der Aufnahmevorrichtung (6) angeordneten Aktor (22a) zur Querführung des Vorsatzgerätes (3) ist, **dadurch gekennzeichnet, dass** die Positionsregelung des Vorsatzgerätes (3) in Querrichtung (QR) mittels des an dem jeweiligen lateralen Bereich angeordneten Stützrades (24) erfolgt, wobei die Positionsregelung des Vorsatzgerätes eingerichtet ist, eine Druckbeaufschlagung der Hydraulikzylinder (27) wechselseitig anzupassen, um druckgeregelt eine von einer Soll-Querlage des Vorsatzgerätes (3) abweichende Ist-Querlage auszugleichen.

2. Erntemaschine (1) nach Anspruch 1, **dadurch gekennzeichnet, dass** die Hydraulikzylinder (27) der Stützräder (24) als doppeltwirkende Hydraulikzylinder ausgeführt sind.

3. Erntemaschine (1) nach einem der Ansprüche 1 bis 2, **dadurch gekennzeichnet, dass** eine Steuerungsvorrichtung (50) vorgesehen ist, die zur Ansteuerung einer dem jeweiligen Hydraulikzylinder (27) zugeordneten Ventilanordnung (VL, VR) eingerichtet ist, wobei die jeweilige Ventilanordnung (VL, VR) dazu eingerichtet ist, einen durch die Druckquelle (34) bereitgestellten hydraulischen Druck im Hydraulikzylinder (27) in Abhängigkeit von einem gewählten Betriebsmodus des Vorsatzgerätes (3) zu regeln.

4. Erntemaschine (1) nach Anspruch 3, **dadurch gekennzeichnet, dass** die Steuerungsvorrichtung (50) an dem Vorsatzgerät (3) angeordnet ist.

5. Erntemaschine (1) nach Anspruch 3 oder 4, **dadurch gekennzeichnet, dass** die Steuerungsvorrichtung (50) zur autonomen Ansteuerung der Ventilanordnungen (VL, VR) eingerichtet ist.

6. Erntemaschine (1) nach einem der Ansprüche 1 bis 5, **dadurch gekennzeichnet, dass** dem Vorsatzgerät (3) mehrere voneinander unabhängig arbeitende Sensoreinrichtungen (28) zugeordnet sind, welche dazu eingerichtet sind, den Abstand (29) zwischen dem Vorsatzgerät (3) und dem Boden (30) zu erfassen.

7. Erntemaschine (1) nach einem der Ansprüche 1 bis 6, **dadurch gekennzeichnet, dass** dem jeweiligen Stützrad (24) Sensoren (51, 52) zugeordnet sind, die zur Erfassung seiner Position relativ zum Vorsatzgerät (3) und/oder des eingestellten Drucks in dem jeweiligen Hydraulikzylinder (27) der Stützräder (24) eingerichtet sind.

8. Erntemaschine (1) nach einem der Ansprüche 2 bis 7, **dadurch gekennzeichnet, dass** die Steuerungsvorrichtung (50) zur Auswertung von Signalen der Sensoreinrichtungen (28) zur Bestimmung der Ist-Querlage eingerichtet ist, um durch eine gegensinnige Ansteuerung der Ventilanordnungen (VL, VR) bei der Druckbeaufschlagung der Hydraulikzylinder (27) eine Korrektur der von der Soll-Querlage des Vorsatzgerätes (3) abweichenden Ist-Querlage durch das Belasten oder Entlasten des Hydraulikzylinders (27) des jeweiligen Stützrades (24) zu bewirken.

9. Erntemaschine (1) nach Anspruch 8, **dadurch gekennzeichnet, dass** die Steuerungsvorrichtung (50) dazu eingerichtet ist, anhand der Auswertung der Signale der Sensoreinrichtungen (28) das Erreichen der Soll-Querlage zu bestimmen und die Ansteuerung der Ventilanordnungen (VL, VR) gemäß dem gewählten Betriebsmodus fortzuführen.

10. Erntemaschine (1) nach einem der Ansprüche 6 bis 9, **dadurch gekennzeichnet, dass** die Sensoreinrichtungen (28) als Tastbügel (31) oder als berührungslos arbeitende Abstandssensoren ausgeführt sind.

11. Erntemaschine (1) nach einem der vorangehenden Ansprüche, **dadurch gekennzeichnet, dass** das Vorsatzgerät (3) als ein Bandschneidwerk (53) ausgeführt ist, welches einen Mittenabschnitt (54) sowie zumindest zwei Seitenabschnitte (55), die jeweils durch ein Rahmengelenk (56) mit dem Mittenabschnitt (54) um eine parallel zur Längsachse der Erntemaschine (1) verlaufende Schwenkachse (57) schwenkbar verbunden sind, umfasst, wobei der jeweilige Seitenabschnitt (55) mittels eines Aktors (58) relativ zum Mittenabschnitt (54) um die Schwenkachse (57) quer zur Fahrrichtung (FR) schwenkbar ist.

12. Erntemaschine (1) nach Anspruch 11, **dadurch gekennzeichnet, dass** an dem Mittenabschnitt (54) und den Seitenabschnitten (55) um eine in Querrichtung (QR) verlaufende Achse schwenkbare Tragarme (60) angeordnet sind, die einen Messerbalken (59) tragen, wobei zur Erfassung einer vertikale Auslenkung der Tragarme (60) des Mittenabschnitts (54) und der Seitenabschnitte (55) mehrere Sensoreinrichtungen (28) vorgesehen sind, die als eine mit den Tragarmen (60) des Mittenabschnitts (54) drehfest verbundene Messwelle (62) und als zumindest eine mit den Tragarmen (60) des jeweiligen Seitenabschnitts (55) drehfest verbundene Messwelle (64) und daran angeordneten Potentiometern (63) ausgeführt sind.

## Claims

1. A self-propelled harvesting machine (1) with a height-adjustable pick-up device (6) on which a front attachment (3) which can be pivoted about a virtual pendulum axis (21) of the pick-up device (6) is disposed for picking up harvested material (7), wherein the pick-up device (6) is configured for the adaptive adjustment of a vertical distance of the front attachment (29) from the ground (30), wherein at least one support wheel (24) is respectively disposed at least on the outer lateral regions of the front attachment (3) and is respectively guided in a height-movable manner by a hydraulic cylinder (27) connected to a hydraulic circuit of a hydraulic system (33) which has a pressure source (34), wherein a regulation of the position of the front attachment (3) in the transverse direction (QR) during the harvesting operation for the transverse guidance of the front attachment (3) by pivoting about the virtual pendulum axis (21) is independent of at least one actuator (22a) which is controlled by the harvesting machine (1) and disposed on the pick-up device (6), **characterized in that** the regulation of the position of the front attachment (3) in the transverse direction (QR) is carried out by means of the support wheel (24) disposed on the respective lateral region, wherein the position regulation of the front attachment is configured to adjust a pressurization of the hydraulic cylinders (27) in alternation in order to compensate, in a pressure-regulated manner, for an actual transverse position of the front attachment (3) which deviates from a target transverse position.

2. The harvesting machine (1) according to claim 1, **characterized in that** the hydraulic cylinders (27) of the support wheels (24) are constructed as double acting hydraulic cylinders.

3. The harvesting machine (1) according to one of claims 1 to 2, **characterized in that** a control device (50) is provided which is configured to control a valve assembly (VL, VR) which is associated with the respective hydraulic cylinder (27), wherein the respective valve assembly (VL, VR) is configured to regulate a hydraulic pressure in the hydraulic cylinder (27) provided by the pressure source (34) as a function of a selected operational mode of the front attachment (3).

4. The harvesting machine (1) according to claim 3, **characterized in that** the control device (50) is disposed on the front attachment (3).

5. The harvesting machine (1) according to claim 3 or claim 4, **characterized in that** the control device (50) is configured for the autonomous control of the valve assemblies (VL, VR).

6. The harvesting machine (1) according to one of claims 1 to 5, **characterized in that** the front attachment (3) is associated with a plurality of mutually independently operating sensor devices (28) which are configured to detect the distance (29) between the front attachment (3) and the ground (30).

7. The harvesting machine (1) according to one of claims 1 to 6, **characterized in that** the respective support wheel (24) is associated with sensors (51, 52) which are configured to detect the position of the support wheel relative to the front attachment (3) and/or the pressure which is set in the respective hydraulic cylinder (27) of the support wheels (24).

8. The harvesting machine (1) according to one of claims 2 to 7, **characterized in that** the control device (50) is configured to evaluate signals from the sensor devices (28) in order to determine the actual transverse position, in order, by means of controlling the valve assemblies (VL, VR) in opposite directions during the pressurization of the hydraulic cylinders (27), to bring about a correction of the actual transverse position which deviates from the target transverse position of the front attachment (3) by loading or unloading the hydraulic cylinder (27) of the respective support wheel (24).

9. The harvesting machine (1) according to claim 8, **characterized in that** the control device (50) is configured to determine, with the aid of the evaluation of the signals from the sensor devices (28), the attainment of the target transverse position and to continue the control of the valve assemblies (VL, VR) in accordance with the selected operational mode.

10. The harvesting machine (1) according to one of claims 6 to 9, **characterized in that** the sensor devices (28) are constructed as sensor arms (31) or as contactlessly-operating distance sensors.

11. The harvesting machine (1) according to one of the preceding claims, **characterized in that** the front attachment (3) is constructed as a draper cutting unit (53) which comprises a central section (54) as well as at least two side sections (55) which are respectively pivotably connected by an articulated frame (56) to the central section (54) about a pivot axis (57) which extends parallel to the longitudinal axis of the harvesting machine (1), wherein, by means of an actuator (58), the respective side section (55) can be pivoted relative to the central section (54) about the pivot axis (57) transversely to the direction of travel (FR).

12. The harvesting machine (1) according to claim 11, **characterized in that** support arms (60) which can be pivoted about an axis which extends in the transverse direction (QR) are disposed on the central section (54) and the side sections (55) and support a cutter bar (59), wherein a plurality of sensor devices (28) are provided for the detection of a vertical deflection of the support arms (60) of the central section (54) and of the side sections (55), the sensor devices being constructed as a measuring shaft (62) which is non-rotatably fixed on the support arms (60) of the central section (54) and as at least one measuring shaft (64) which is non-rotatably fixed on the support arms (60) of the respective side section (55), and potentiometers (63) disposed thereon.

## Revendications

1. Moissonneuse (1) automotrice dotée d'un dispositif de support (6) réglable en hauteur, sur lequel est disposée une tête de récolte (3) destinée au ramassage de produits à récolter (7), avec possibilité de pivotement autour d'un axe oscillant (21) virtuel du dispositif de support (6), le dispositif de support (6) étant conçu pour un réglage adaptatif d'une distance verticale de la tête de récolte (29) par rapport au sol (30), sachant qu'au moins sur les zones latérales extérieures de la tête de récolte (3), il est prévu respectivement au moins une roue de support (24) qui est guidée de manière réglable en hauteur, respectivement par le biais d'un vérin hydraulique (27) raccordé à un circuit hydraulique d'un système hydraulique (33) présentant une source de pression (34), sachant qu'un réglage de position de la tête de récolte (3) dans la direction transversale (QR), lors du service de récolte, du fait du pivotement autour de l'axe oscillant (21) virtuel, est indépendant d'au moins un actionneur (22a) activé par la moissonneuse (1) et placé sur le dispositif de support (6) en vue du guidage transversal de la tête de récolte (3), **caractérisée en ce que** le réglage de position de la tête de récolte (3) dans la direction transversale (QR) s'effectue au moyen de la roue de support (24) installée sur la zone latérale respective, le réglage de position de la tête de récolte étant conçu pour adapter réciproquement l'application d'une pression aux vérins hydrauliques (27), aux fins de compenser par réglage de pression une position transversale réelle s'écartant d'une position transversale de consigne de la tête de récolte (3).

2. Moissonneuse (1) selon la revendication 1, **caractérisée en ce que** les vérins hydrauliques (27) des roues de support (24) sont réalisés sous forme de vérins hydrauliques à double effet.

3. Moissonneuse (1) selon une des revendications 1 à 2, **caractérisée en ce qu'**il est prévu un dispositif de commande (50) qui est conçu pour l'activation d'un dispositif de valve (VL, VR) associé au vérin hydraulique (27) respectif, le dispositif de valve (VL, VR) respectif étant conçu pour régler dans le vérin hydraulique (27) une pression hydraulique fournie par la source de pression (34), en fonction d'un mode de fonctionnement choisi de la tête de récolte (3).

4. Moissonneuse (1) selon la revendication 3, **caractérisée en ce que** le dispositif de commande (50) est installé sur la tête de récolte (3).

5. Moissonneuse (1) selon la revendication 3 ou 4, **caractérisée en ce que** le dispositif de commande (50) est conçu pour l'activation autonome des dispositifs de valves (VL, VR).

6. Moissonneuse (1) selon une des revendications 1 à 5, **caractérisée en ce que** sont associés à la tête de récolte (3), plusieurs dispositifs à capteur (28) qui fonctionnent indépendamment les uns des autres et sont conçus pour mesurer la distance (29) entre la tête de récolte (3) et le sol (30).

7. Moissonneuse (1) selon une des revendications 1 à 6, **caractérisée en ce que** sont associés à la roue de support (3) respective, des capteurs (51, 52) qui sont conçus pour la détection de sa position par rapport à la tête de récolte (3) et/ou de la pression réglée dans le vérin hydraulique (27) respectif des roues de support (24).

8. Moissonneuse (1) selon une des revendications 2 à 7, **caractérisée en ce que** le dispositif de commande (50) est conçu pour l'évaluation de signaux des dispositifs à capteur (28) en vue de la détermination de la position transversale réelle, afin d'opérer, par une activation de sens opposés des dispositifs de valves (VL, VR) lors de l'application de la pression aux vérins hydrauliques (27), une correction de la position transversale réelle s'écartant de la position transversale de consigne de la tête de récolte (3), du fait de la charge ou de la décharge du vérin hydraulique (27) de la roue de support (24) respective.

9. Moissonneuse (1) selon la revendication 8, **caractérisée en ce que** le dispositif de commande (50) est conçu pour déterminer si la position transversale de consigne est atteinte, sur la base de l'évaluation des signaux des dispositifs à capteur (28), et pour poursuivre l'activation des dispositifs de valves (VL, VR) conformément au mode de fonctionnement choisi.

10. Moissonneuse (1) selon une des revendications 6 à 9, **caractérisée en ce que** les dispositifs à capteur (28) sont réalisés sous forme d'étriers palpeurs (31) ou de capteurs de distance fonctionnant sans contact.

11. Moissonneuse (1) selon une des revendications précédentes, **caractérisée en ce que** la tête de récolte (3) est réalisée sous forme tablier de coupe à tapis (53) qui comprend une partie médiane (54) ainsi qu'au moins deux parties latérales (55) qui sont chacune reliées à la partie médiane (54) par une articulation de bâti (56), avec possibilité de pivotement autour d'un axe de pivotement (57) s'étendant parallèlement à l'axe longitudinal de la moissonneuse (1), la partie latérale (55) respective pouvant être pivotée par rapport à la partie médiane (54) au moyen d'un actionneur (58), autour de l'axe de pivotement (57), perpendiculairement au sens de déplacement (FR).

12. Moissonneuse (1) selon la revendication 11, **caractérisée en ce que** des bras supports (60) sont disposés sur la partie médiane (54) et les parties latérales (55), avec possibilité de pivotement autour d'un axe s'étendant dans la direction transversale (QR), et portent une barre porte-lames (59), sachant que pour détecter une déviation verticale des bras supports (60) de la partie médiane (54) et des parties latérales (55), il est prévu plusieurs dispositifs à capteur (28) qui sont réalisés sous la forme d'un axe de mesure (62), relié de manière solidaire en rotation aux bras supports (60) de la partie médiane (54), et sous la forme d'au moins un axe de mesure (64), relié de manière solidaire en rotation aux bras supports (60) de la partie latérale (55) respective, et de potentiomètres (63) placés sur celui-ci
